# EUROPÄISCHE PATENTSCHRIFT

(11) **EP 1 609 651 B1**
(45) Veröffentlichungstag und Bekanntmachung des Hinweises auf die Patenterteilung: **30.04.2014**
(21) Anmeldenummer: 05013402.2
(22) Anmeldetag: 22.06.2005
(51) Int. Cl.: B60J 7/20

(54) **Abdeckvorrichtung für eine in einem oberen, hinteren Seitenwandbereich eines Cabrioletfahrzeuges angeordnete Durchgangsöffnung**
Covering device for a passage opening in the upper part of the rear side wall of a convertible vehicle
Dispositif de fermeture pour une ouverture disposée sur une partie latérale arrière d'un véhicule cabriolet

(30) Priorität: 22.06.2004 DE 202004009799 U
(43) Veröffentlichungstag der Anmeldung: 28.12.2005
(73) Patentinhaber: Valmet Automotive Oy, 23500 Uusikaupunki (FI)
(72) Erfinder: van Berkum, Wim, 49179 Ostercappeln (DE)
(74) Vertreter: Kronthaler, Schmidt & Coll.

(56) Entgegenhaltungen:
- EP-A- 1 288 046
- DE-A1- 10 143 365
- DE-C1- 3 801 148
- US-A- 4 799 729

## Beschreibung

Die Erfindung betrifft eine Abdeckvorrichtung für eine in einem oberen, hinteren Seitenwandbereich eines Cabrioletfahrzeugs angeordnete Durchgangsöffnung gemäß dem Oberbegriff des Anspruchs 1.

Bei einer bekannten gattungsgemäßen Abdeckvorrichtung (EP 1 288 046 A2) ist das Abdeckteil als ein Schieber ausgebildet, der beim Öffnen des Verdecks durch ein Gestängeteil im Wesentlichen im Fahrzeuglängsrichtung nach vorne und schräg nach unten unter eine Verkleidung bewegt wird. Der Schieber muss insgesamt um eine Strekke derart bewegt werden, dass er sich bei geschlossenem Verdeck vollständig vor dem durch die Durchtrittsöffnung durchragenden Teil des Verdeckgestänges befindet. Dies bedeutet einen verhältnismäßig großen Platzbedarf vor dem Gestängeteil.

Aus der DE 39 036 79 C1 ist eine Abdeckvorrichtung für eine Durchgangsöffnung für ein Verdeckgestänge bekannt, die eine Abdeckklappe aufweist, die auf der der Fahrzeugmitte zugewandte Seite des Gestänges um eine etwa zur Fahrzeuglängsrichtung parallele Achse schwenkbar angeordnet ist und beim Schließen des Verdecks von einem Gestängeteil aufwärts verschwenkt wird.

Aus der US 6,682,149 B1 ist ein Abdeckteil für eine Durchgangsöffnung eines Cabrioletgestänges bekannt, die von einem Arm gehalten wird, der um eine zur Fahrzeugslängsrichtung parallele Achse schwenkbar ist und zum Freigeben der Durchgangsöffnung von einem Zusatzmechanismus z. B. einem Bowdenzug, derart verschwenkt wird, dass das Abdeckteil zur Außenseite des Fahrzeugs hin unter dessen Außenhaut verschwenkt wird.

Der Erfindung liegt die Aufgabe zugrunde, eine gattungsgemäße Abdeckvorrichtung zu schaffen, die einfach konstruiert ist und erlaubt, das Abdeckteil in eine verdeckte Stellung unterhalb des Gestängeteils platzsparend zu versenken.

Diese Aufgabe wird mit dem Merkmal des Anspruchs 1 gelöst.

Das erfindungsgemäße Abdeckteil ist um eine quer zur Fahrzeuglängsrichtung verlaufende Achse derart schwenkbar angeordnet, dass es nach vorne und unten verschwenkt wird, um die Durchgangsöffnung freizugeben. Zudem wird das Abdeckteil beim Schließen des Verdecks durch das Gestängeteil nach vorne verschwenkt. Dies ermöglicht eine einfache Konstruktion und erlaubt, das Abdeckteil in eine verdeckte Stellung unterhalb des Gestängeteils platzsparend zu versenken.

Die Unteransprüche sind auf vorteilhafte Ausführungsformen und Weiterbildungen der erfindungsgemäßen Abdeckvorrichtung gerichtet.

Die Erfindung wird im Folgenden anhand schematischer Zeichnungen beispielsweise und mit weiteren Einzelheiten erläutert.

In den Figuren stellen dar:
- Figur 1: eine teilweise aufgeschnittene, perspektivi- sche Ansicht eines Cabrioletfahrzeugs mit ei- nem in Schließstellung befindlichen Verdeck- gestänge;
- Figur 2: eine vergrößerte perspektivische Ansicht ge- mäß Figur 1 mit einem in einem Verdeckkasten versenkten Faltverdeck,
- Figur 3: eine perspektivische Ansicht des Abdeckteils und
- Figur 4: eine schematische Ansicht der Anordnung gemäß Figur 3 mit in geschlossener und geöffneter Stellung befindlichem Abdeckteil.

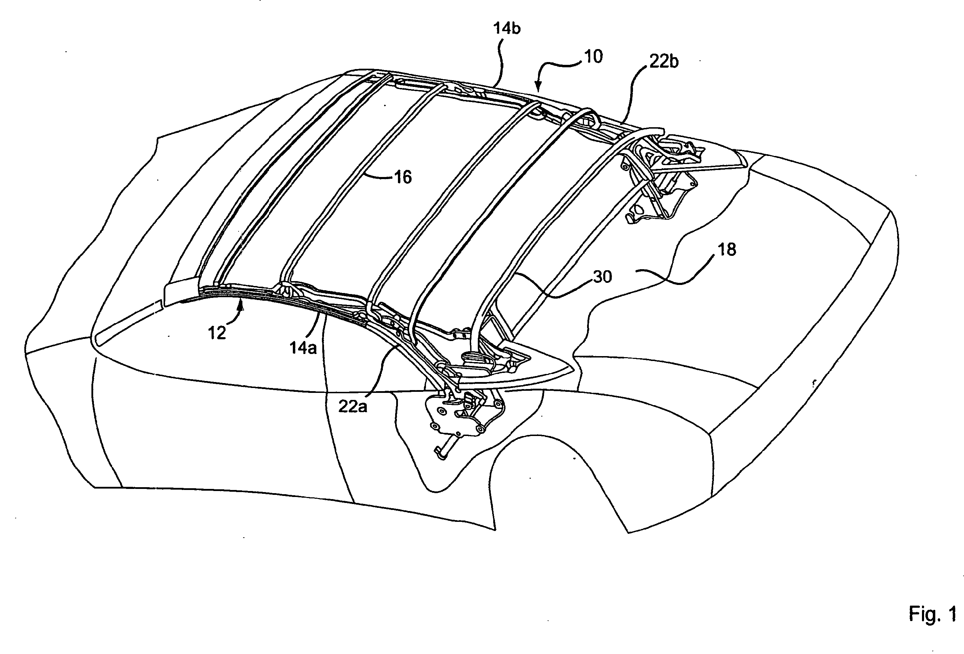

Gemäß Figur 1 weist ein insgesamt mit 10 bezeichnetes Cabrioletfahrzeug ein in geschlossenem Zustand dargestelltes, insgesamt mit 12 bezeichnetes Verdeckgestänge auf, das aus zwei zur Fahrzeuglängsebene symmetrisch angeordneten Seitengestänge 14a und 14b zusammengesetzt ist, die über Querspriegel 16 miteinander verbunden sind. Die Dachhaut ist in Figur 1 nicht dargestellt. Das Verdeckgestänge ist zusammen mit der von ihm aufgespannten Dachhaut in einem heckseitigen Verdeckkasten 18 ablegbar.

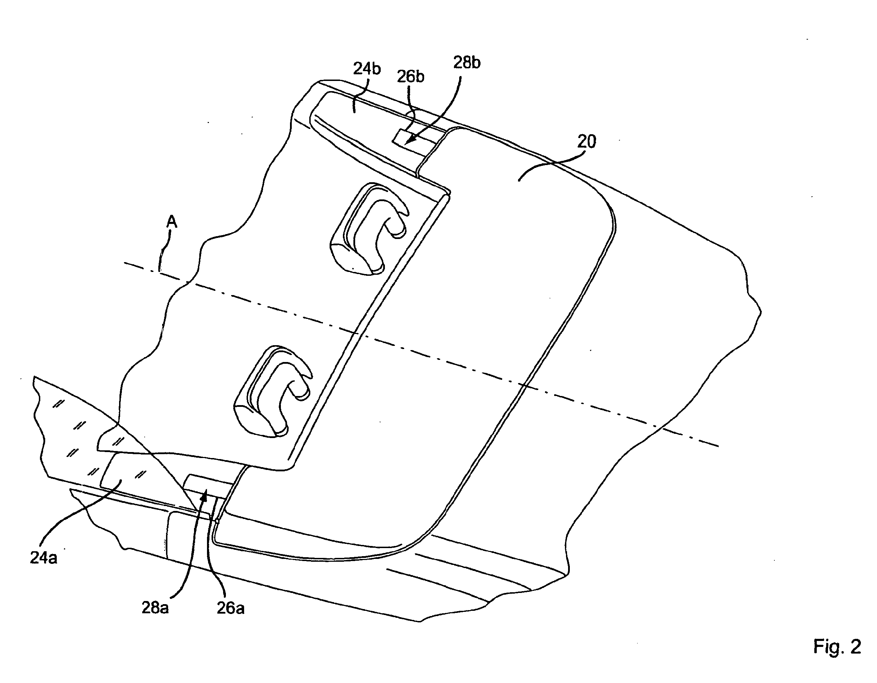

Der Verdeckkasten 18 wird im voll geöffneten Zustand des Verdecks von einer Verdeckklappe 20 verschlossen (Fig. 2).

Zum Schließen des Verdecks wird in an sich bekannter weise die Verdeckklappe 20 gemäß Figur 2 in Uhrzeigerrichtung verschwenkt, so dass sie bezogen auf das Fahrzeug nach vorne hin eine Öffnung frei gibt, durch die hindurch das Verdeck aufgeklappt werden kann und in seine Stellung gemäß Figur 1 gebracht werden kann. Dabei durchragen hinterste Gestängeteile 22a, 22b in Verkleidungsteilen 24a, 24b ausgebildete Durchgangsöffnungen 26a, 26b, die im geöffneten Zustand des Verdecks von Abdeckteilen 28a, 28b verschlossen werden. Nachdem das Verdeck in seine Stellung gemäß Figur 1 gebracht ist, befindet sich ein hinterster Spannbügel 30 (Figur 1) an dem der Hinterrand der Dachhaut befestigt ist, zunächst noch in aufwärts verschwenkter Stellung. Die Verdeckklappe 20 wird geschlossen und anschließend wird der Spannbügel 30 gemäß Figur 1 in Uhrzeigerrichtung verschwenkt, so dass es sich auf die Verdeckklappe 20 absenkt.

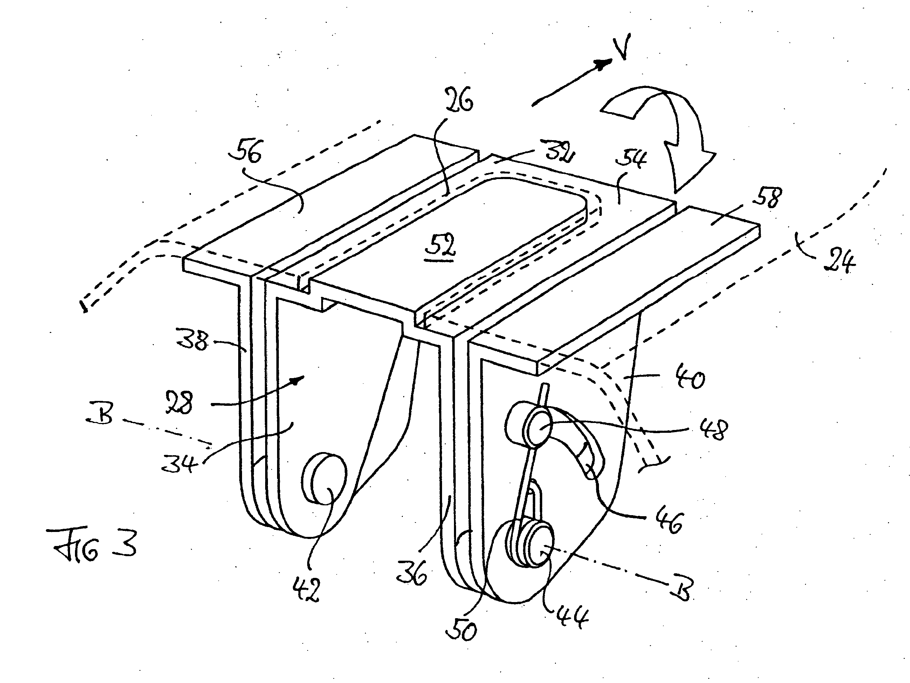

Die bisher beschriebene Anordnung, die symmetrisch zur Fahrzeuglängsmittelebene A (Figur 2) ist, ist an sich bekannt. Im Folgenden wird die erfindungsgemäße Konstruktion der Abdeckteile beschrieben, wobei die Darstellung gemäß Figur 3 das gemäß Figur 2 linksseitige Abdeckteil schräg von hinten zeigt. Der Pfeil V gibt die Vorwärtsrichtung des Fahrzeugs an. Die gemäß Figur 3 rechte Seite ist der Fahrzeuglängsmittelebene des Fahrzeugs zugewandt.

Das in Figur 3 insgesamt mit 28 bezeichnete Abdeckteil ist insgesamt U-förmig ausgebildet und enthält ein Oberteil 32, von dem nach unten zwei Schenkel 34, 36 vorstehen. Das Abdeckteil 28 ist an seitlichen Führungs- bzw. Halteteilen 38 und 40 mittels Lagerzapfen 42 und 44 um eine in Fahrzeugquerrichtung gerichtete Achse B-B schwenkbar gelagert. In jeweils neben den Schenkeln 34 und 36 angeordneten Schenkeln der Halteteile 38 und 40 sind Führungsnuten 46 ausgebildet, die konzentrisch zur Schwenkachse B-B verlaufen und in denen Führungszapfen 48 beweglich sind, die an den Schenkeln 34 und 36 des Abdeckteils 28 vorgesehen sind. In Figur 3 ist jeweils nur eine Führungsnute und ein Führungszapfen sichtbar.

Eine Schenkelfeder 50 stützt sich mit einem Schenkel an dem Halteteil und mit dem anderen Schenkel an dem Führungszapfen 48 ab und spannt das Abdeckteil 28 elastisch in seine in Figur 3 dargestellte Schließstellung vor, die bspw. durch den Anschlag des Führungszapfen 48 am Ende der Führungsnute 46 definiert ist. Es versteht sich, dass an beiden Halteteilen 38, 40 Vorspannfedern vorgesehen sein können.

In Figur 3 gestrichelt eingezeichnet ist das Verkleidungsteil 24 mit der Durchgangsöffnung 26.

Das Oberteil 32 des Abdeckteils 28 ist mit einem vorstehenden mittleren Bereich 52 ausgebildet, dessen Oberseite in der in Figur 3 dargestellten Schließstellung des Abdeckteils 28 bündig mit der benachbarten Oberfläche des Verkleidungsteils 20 verläuft, so dass die Durchgangsöffnung 26 durch das Abdeckteil 28 verschlossen ist. Es versteht sich, dass die Oberfläche des Bereiches 52 vorteilhafterweise aus ähnlichen Material besteht oder ein ähnliches Aussehen hat wie die benachbarten Oberflächenbereiche des Verkleidungsteils 24.

Den mittleren Bereich 52 seitlich umgebende Bereichen 54 des Abdeckteils 28 überlappen einen Spalt zwischen dem Bereich 24 und der Durchgangsöffnung 26 und verlaufen bündig mit ihnen benachbarten Oberflächen von Randflanschen 56 und 58 der Halteteile 38 und 40, die an der Unterseite des Verkleidungsteils 20 anliegen.

Die Halteteile 38 und 40 können an Karosserieblechen und/oder der Unterseite des Verkleidungsteils 24 befestigt sein.

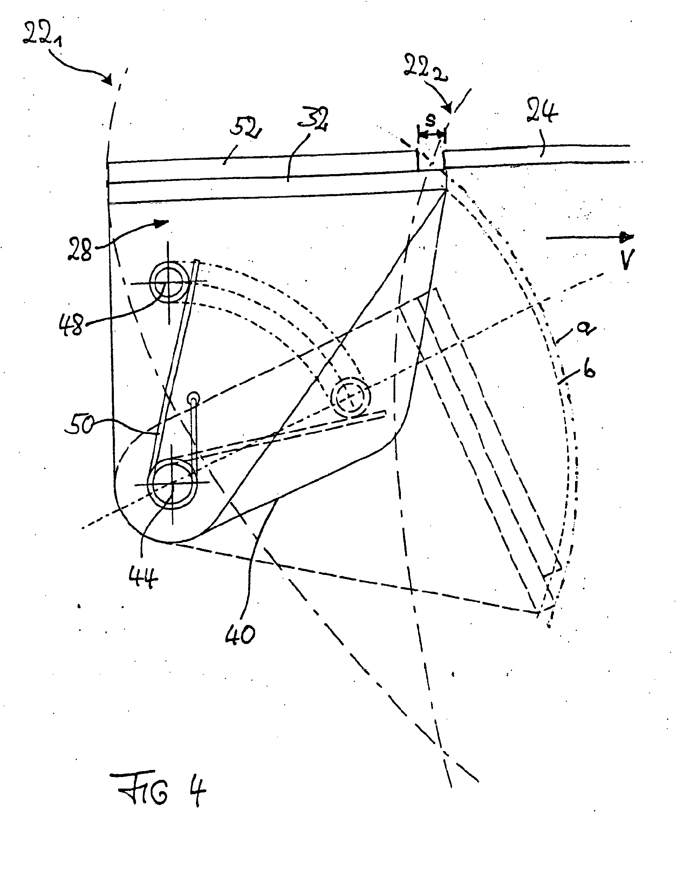

Die Funktion der beschriebenen Anordnung wird im Folgenden anhand der Figur 4 erläutert, die eine Ansicht der Anordnung gemäß Figur 3 von rechts zeigt. Mit ausgezogenen Linien ist in Figur 4 die geschlossene Stellung des Abdeckteils 28 dargestellt.

Wenn das Verdeck geschlossen wird, gelangt das Gestängeteil 22, das sich in den Raum zwischen den Schenkeln 34 und 36 hineinbewegt, in seine Stellung gemäß 22₁ in Anlage an den Hinterrand des Abdeckteils 28 und verschwenkt diese bei weiterem Schließen in Uhrzeigerrichtung, so dass sich der Vorderrand des Oberteils 32 längs der Kurven a, b auf einer Kreisbahn um die Mitte des Lagerzapfens 44 unter das Verkleidungsteil 24 bewegt. Die Kurven a und b stellen die Bewegungsbahn des vorderen oberen Randes des Bereiches 52 und des Bereiches 54 dar. In geschlossener Stellung des Verdecks nimmt das Gestängeteil 22 die Stellung gemäß 22₂ ein, in der das Abdeckteil 28 unter zunehmender Spannung 54 in seine vollständig unterhalb des Verkleidungsteil 24 verschwenkte Stellung verschwenkt ist. Beim Öffnen des Verdecks wird das Abdeckteil 28 durch die Vorspannung der Schenkelfeder 50 in gegen Uhrzeigerrichtung verschwenkt und folgt der Bewegung des Gestängeteils 22.

Wie aus Figur 4 ersichtlich, befindet sich die Schwenkachse B-B (Figur 3), die der Mitte des Lagerzapfens 44 entspricht in Schließstellung des Abdeckteil 28 unter dem hinteren Bereich des Oberteils 32 angeordnet. Bevorzugt befindet sich der Lagerzapfen 44 gemäß Figur 4 noch weiter links, wobei er sich vollständig außerhalb und hinter dem Oberteil befinden kann. Dadurch kann ein Spaltmaß s zwischen dem Rand der Oberseite des Verkleidungsteils 24 und dem Rand der Oberseite des Abdeckteils 28 verkleinert werden.

Die beschriebene Konstruktion kann in vielfältiger Weise abgeändert werden. Bspw. können die beide Halteteile über ein unterhalb des Verkleidungsteils 24 angeordnetes Verbindungsglied starr miteinander verbunden werden, so dass eine vollständig vormontierte Baugruppe aus den Teilen gemäß Figur 3 im Fahrzeug montiert werden kann. Die Halteteile können durch Karosseriebleche gebildet sein. Bei entsprechend stabiler Ausbildung des Lagerzapfens genügt ein seitliches Halteteil. Das Abdeckteil muß dann nicht mit zwei seitlichen Schenkeln ausgebildet sein. Wesentlich für die Realisierung der Erfindung ist, dass das Abdeckteil 28 um eine quer zur Fahrzeuglängsrichtung verlaufende Achse nach unten verschwenkbar ist. Die Verschwenkung geschieht vorteilhafterweise unmittelbar durch die Anlage des Gestängeteils. Es können jedoch auch motorische Mittel oder sonstige Antriebsvorrichtungen zum Verschwenken vorgesehen sein. Dies ist auch dann vorteilhaft, wenn das Abdeckteil in seine Offenstellung verschwenkt werden soll um bspw. Wartungsarbeiten am Verdeckgestänge vorzunehmen.

### Bezugszeichen

- 10: Cabrioletfahrzeug
- 12: Verdeckgestänge
- 14: Seitengestänge
- 16: Querspriegel
- 18: Verdeckkasten
- 20: Verdeckklappe
- 22: Gestängeteil
- 24: Verkleidungsteil
- 26: Durchgangsöffnung
- 28: Abdeckteil
- 30: Spannbügel
- 32: Oberteil
- 34: Schenkel
- 36: Schenkel
- 38: Halteteil
- 40: Halteteil
- 42: Lagerzapfen
- 44: Lagerzapfen
- 46: Führungsnuten
- 48: Führungszapfen
- 50: Schenkelfeder
- 52: Bereich
- 54: Bereich
- 56: Randflansch
- 58: Randflansch

## Patentansprüche

1. Abdeckvorrichtung für eine in einem oberen, hinteren Seitenwandbereich eines Cabrioletfahrzeugs angeordnete Durchgangsöffnung (26), durch welche sich beim Öffnen und Schließen des Verdecks wenigstens ein Gestängeteil (22) eines seitlichen Verdeckgestänges hindurchbewegt, welche Abdeckvorrichtung ein Abdeckteil (28) enthält, das beim Schließen des Verdecks aus einer die Durchgangsöffnung verschließenden Schließstellung in eine die Durchgangsöffnung freigebende Öffnungsstellung bewegbar ist, wobei das.Abdeckteil (28) ein die Durchgangsöffnung (26) in Schließstellung verschließendes Oberteil (32) aufweist, das starr mit wenigstens einem Schenkel (34, 36) verbunden ist, der um eine fahrzeugfeste Schwenkachse (B) schwenkbar gelagert ist, die bei in Schließstellung befindlichen Abdeckteil unterhalb von dessen Oberteil verläuft, **dadurch gekennzeichnet, dass** die fahrzeugfeste Schwenkachse (B) in Fahrzeugquerrichtung verläuft, wobei das Abdeckteil (28) beim Schließen des Verdecks durch das Gestängeteil (22) nach vorne verschwenkt wird.

2. Vorrichtung nach Anspruch 1, **dadurch gekennzeichnet, dass** die Schwenkachse (B) bezogen auf die Fahrzeuglängsrichtung hinter einem vorderen Rand des Abdeckteils (28) angeordnet ist.

3. Vorrichtung nach einem der Ansprüche 1 oder 2,
**dadurch gekennzeichnet, dass** das Abdeckteil (28) elastisch in seine Schließstellung vorgespannt ist

4. Vorrichtung nach einem der Ansprüche 1 bis 3,
**dadurch gekennzeichnet, dass** das Abdeckteil (28) insgesamt U-förmig ist, wobei die Schenkel (34, 36) des U im Bereich ihrer freien Enden um eine gemeinsame fahrzeugfeste Schwenkachsen (B) schwenkbar gelagert sind.

5. Vorrichtung nach einem der Ansprüche 1 bis 4,
**dadurch gekennzeichnet, dass** der bzw. die Schenkel (34, 36) an einem fahrzeugfesten Halteteil (38, 40) schwenkbar gelagert ist bzw. sind.

6. Vorrichtung nach Anspruch 5, **dadurch gekennzeichnet, dass** die Durchgangsöffnung (26) in einem fahrzeugfesten Verkleidungsteil (24) ausgebildet ist und das Oberteil (32) des Abdeckteils (28) die Durchgangsöffnung in Schließstellung überlappende Seitenbereiche (54) und einen vorstehenden mittleren Bereich (52) aufweist, dessen Oberseite bündig mit den benachbarten Bereichen der Oberseite des Verkleidungsteils (24) verläuft.

## Claims

1. A covering device for a passage opening (26) arranged in an upper rear sidewall region of a convertible vehicle, through which passage opening (26) at least one linkage member (22) of a lateral hood linkage passes during the opening and closing of the hood, said covering device including a cover part (28) which, when closing the hood, can be moved from a closing position covering the passage opening to an opening position uncovering the passage opening, said cover part (28) comprising an upper part (32), which closes the passage opening (26) in the closed position and which is rigidly connected to at least one arm (34, 36) which is supported so as to pivot around a pivoting axle (B) which is fixed to the vehicle, said pivoting axle (B) extending below the upper part of the cover part when the latter is in the closing position, **characterised in that** the pivoting axle (B) fixed to the vehicle extends in the transverse vehicle direction, said cover part (28) being pivoted to the front by the linkage member (22) when closing the hood.

2. The device according to claim 1, **characterised in that**, with respect to the longitudinal vehicle direction, the pivoting axle (B) is arranged behind a front edge of the cover part (28).

3. The device according to any one of claims 1 or 2, **characterised in that** the cover part (28) is pretensioned elastically into its closing position.

4. The device according to any one of claims 1 to 3, **characterised in that** the cover part (28) is generally U-shaped, the arms (34, 36) of the U being supported in the region of their free ends so as to pivot around a common pivot axle (B) fixed to the vehicle.

5. The device according to any one of claims 1 to 4, **characterised in that** the arm(s) (34, 36) is (are) pivotally supported on a retaining part (38, 40) fixed to the vehicle.

6. The device according to claim 5, **characterised in that** the passage opening (26) is formed in a trim part (24) fixed to the vehicle and the upper part (32) of the cover part (28) comprises lateral regions (54) overlapping the passage opening in the closing position and a protruding central region (52) whose upper side extends flush with the adjacent regions of the upper side of the trim part (24).

## Revendications

1. Dispositif de recouvrement d'une ouverture de passage (26) disposée dans une région supérieure arrière d'une paroi latérale d'un véhicule cabriolet, ladite ouverture de passage (26) étant traversée par au moins une pièce de tringlerie (22) d'une tringlerie de capote latérale lors de l'ouverture et de la fermeture de la capote, ledit dispositif de recouvrement présentant un élément de recouvrement (28) qui est déplaçable, lors de la fermeture de la capote, d'une position de fermeture, fermant ladite ouverture de passage, vers une position d'ouverture dégageant l'ouverture de passage, ledit élément de recouvrement (28) présentant une partie supérieure (32), qui ferme l'ouverture de passage (26) dans la position de fermeture et qui est relié de manière rigide à au moins une branche (34, 36) supportée de manière à pouvoir pivoter autour d'un axe de pivotement (B) monté fixe au véhicule, ledit axe de pivotement (B) s'étendant au-dessous de ladite partie supérieure de l'élément de recouvrement lorsque ce dernier se trouve dans la position de fermeture,
**caractérisé en ce que** l'axe de pivotement (B) monté fixe au véhicule s'étend dans la direction transversale du véhicule, ledit élément de recouvrement (28) étant pivoté vers l'avant par la pièce de tringlerie (22) lors de la fermeture de la capote.

2. Dispositif selon la revendication 1, **caractérisé en ce que** l'axe de pivotement (B) est disposé, par rapport à la direction longitudinale du véhicule, derrière un bord avant de l'élément de recouvrement (28).

3. Dispositif selon l'une quelconque des revendications 1 ou 2, **caractérisé en ce que** l'élément de recouvrement (28) est précontraint élastiquement vers sa position de fermeture.

4. Dispositif selon l'une quelconque des revendications 1 à 3, **caractérisé en ce que** l'élément de recouvrement (28) est réalisé généralement sous forme d'un U dont les branches (34, 36) sont supportées dans la région de leurs extrémités libres de manière à pouvoir pivoter autour d'un axe de pivotement (B) commun monté fixe au véhicule.

5. Dispositif selon l'une quelconque des revendications 1 à 4, **caractérisé en ce que** le(s) bra(s) (34, 36) est (sont) supporté(s) de manière pivotante sur une pièce de fixation (38, 40) monté fixe au véhicule.

6. Dispositif selon la revendication 5, **caractérisé en ce que** l'ouverture de passage (26) est réalisée dans un habillage (24) monté fixe au véhicule et la partie supérieure (32) de l'élément de recouvrement (28) comprend des régions latérales (54), qui chevauchent l'ouverture de passage dans la position de fermeture, et une région centrale (52) faisant saillie, dont la face supérieure s'étend au ras des régions adjacentes de la face supérieure de l'habillage (24).
